# EUROPÄISCHE PATENTSCHRIFT

(11) **EP 4 149 328 B1**
(45) Veröffentlichungstag und Bekanntmachung des Hinweises auf die Patenterteilung: **08.04.2026**
(21) Anmeldenummer: 21723728.8
(22) Anmeldetag: 05.05.2021
(51) Int. Cl.: A47J 27/04, F24C 15/18, F24C 15/32

(54) **DAMPFGARGERÄT UND VERFAHREN ZUM BEHANDELN VON ESSWAREN MIT DAMPF**
STEAM APPARATUS AND METHOD OF HANDLING FOOD WITH STEAM
APPAREIL À VAPEUR ET MÉTHODE DE MANIPULATION DES ALIMENTS AVEC LA VAPEUR

(30) Priorität: 11.05.2020 EP 20290041
(43) Veröffentlichungstag der Anmeldung: 22.03.2023
(73) Patentinhaber: BSH Hausgeräte GmbH, 81739 München (DE)
(72) Erfinder: BIERG, Victorien, 67300 Schiltigheim (FR); CADEAU, Christophe, 67113 Blaesheim (FR); FLESCH, Sebastien, 67150 Gerstheim (FR); HOFFMANN, Olivier, 67120 Molsheim (FR); JELLIMANN, Jeremy, 67800 Bischheim (FR); MARKO, Hakim, 67400 Illkirch-Graffenstaden (FR)
(86) Internationale Anmeldenummer: PCT/EP2021/061837
(87) Internationale Veröffentlichungsnummer: WO 2021/228647

(56) Entgegenhaltungen:
- EP-A2- 2 775 217
- DE-A1- 19 907 049
- US-A1- 2005 051 036

## Beschreibung

### Technisches Gebiet

Die vorliegende Erfindung betrifft ein Dampfgargerät nach dem Oberbegriff des Anspruchs 1.

Die vorliegende Erfindung betrifft des Weiteren ein Verfahren zum Behandeln, insbesondere zum Auftauen, zum Wärmen und zum Garen, von Esswaren mit Dampf, nach dem Oberbegriff des Anspruchs 13.

### Stand der Technik

Aus dem Stand der Technik sind Vorrichtungen in einem Schubladen-Format bereits bekannt. So sind Wärmeschubladen, Mikrowellenschubladen und Vakuumierschubladen, so genannte Sous-Vide-Schubladen, bereits auf dem Markt.

Eine Schublade zum Wärmen von Lebensmitteln ist beispielsweise aus der Druckschrift US 2005 274712 A bekannt. Diese Wärmeschublade weist einen kleinen beheizten Garraum auf und hat die Besonderheit, dass sie, wie bei einer herkömmlichen Schublade, durch ein Ziehen an ihrer Frontblende geöffnet werden kann. Um den Garraum zu beheizen, ist in diesem ein Heizgerät angeordnet. Diese Vorrichtung wird vorwiegend verwendet, um Geschirr zu wärmen, aber es ist auch möglich Essen darin zu garen, insbesondere mittels Niedertemperaturgaren. Dampf kann in dieser Vorrichtung nicht bereitgestellt werden.

Eine Sous-Vide-Schublade dient zum Vakuumieren von Lebensmitteln, um deren Haltbarkeit zu verlängern. Dabei werden die Lebensmittel in einem Vakuumierbeutel angeordnet und dann dem Vakuumierbeutel Sauerstoff und Luft entzogen. Sous-Vide-Schubladen ermöglichen es nicht Essen zu wärmen oder Dampf zu produzieren.

Dampfgargeräte ermöglichen eine besonders schonende Zubereitung von Lebensmitteln mit etwa 30 bis etwa 100 °C heißem Wasserdampf. Dabei bleiben Farbe, Aroma und Vitamine der Speisen besonders gut erhalten.

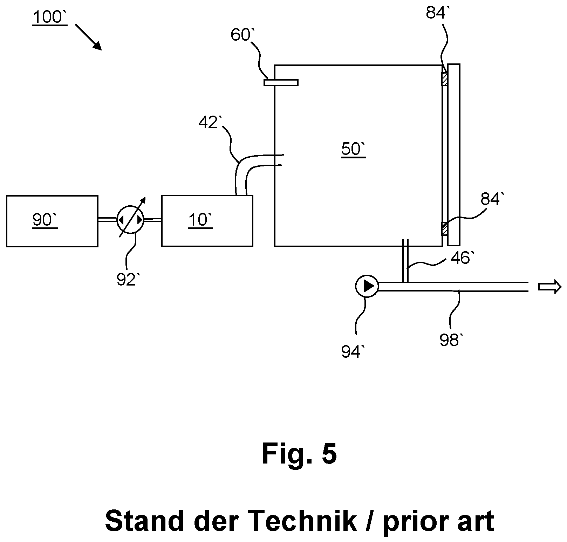

Figur 5 zeigt einen Dampfofen aus dem Stand der Technik. Ein Plastiktank 90' speichert das Wasser für die Dampfherstellung. Eine Pumpe 92'befördert das Wasser vom Tank zu einer Verdampfereinheit 10'. Die Verdampfereinheit 10' dient dazu, das Wasser zu erwärmen und zu verdampfen. Der Dampf wird über einen Dampfeinlass 42' in einen Garraum 20' geleitet. Sofern der Dampfofen bei atmosphärischem Druck arbeitet, ermöglicht ein Dampfauslass 46' Überdruck aus dem Garraum 20 abzulassen. Dieser überschüssige Dampf wird mit Frischluft gemischt und von einem Ventilator 94' in die Küche des Benutzers geleitet. Ein im Garraum 20'angeordneter Sensor 60' misst die im Garraum 20' vorliegende Temperatur und/oder Luftfeuchtigkeit, um die Dampfproduktion zu steuern.

Aus der Druckschrift EP 3 470 739 A1 ist ein Dampfgargerät nach dem Oberbegriff des Anspruchs 1 bekannt (vgl. insbesondere Absatz [0018] der EP 3 470 739 A1). Der Garraum dieses Dampfgargeräts ist als Schublade ausgebildet. Das Dampfgargerät hat eine Unterdruckeinrichtung in Wirkverbindung mit dem Garraum. Die Zuleitung des Dampfes erfolgt über eine Seitenwand der Schublade.

Des Weiteren ist ein als Schubladenfach ausgebildetes Dampfgargerät aus der Druckschrift EP 2 775 217 A2 bekannt. Dieses Dampfgargerät ist ein Schubladenfach eines Backofens, das abdeckungsfrei und zum Garraum des Backofens hin offen ist. In dem Schubladenfach sind ein Esswarenbehälter sowie ein Wassertank anordbar. Der Wassertank ist mit einer außerhalb des Dampfgeräts angeordneten Verdampfereinheit verbunden. Der von der Verdampfereinheit erzeugte Dampf wir über einen Einlass in den Garraum des Backofens geleitet.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Dampfgargerät der eingangs genannten Art sowie ein Verfahren der eingangs genannten Art so weiterzubilden, dass die Wartung und die Reinigung sowie die Bedienbarkeit des Dampfgargerätes vereinfacht sind. Im Speziellen sollen das Befüllen des Dampfgargerätes mit Esswaren, das Entnehmen der Esswaren aus dem Dampfgargerät, das Reinigen des Garraums sowie der Zugang zu einem getrennt vom Garraum angeordneten Innenraum des Dampfgerätes erleichtert werden.

Diese Aufgabe wird durch ein Dampfgargerät mit den im Anspruch 1 angegebenen Merkmalen sowie durch ein Verfahren mit den im Anspruch 13 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf, dass das Dampfgerät als Schublade ausgebildet ist. Da in diesem Schubladenfach sowohl der Garraum als auch die Verdampfereinheit angeordnet sind, ist bei der vorliegenden Erfindung die Verdampfereinheit besonders leicht zugänglich. Dies ist beispielsweise bei Reparatur und/oder Wartung der Verdampfereinheit vorteilhaft.

Bei dem vorliegenden Dampfgargerät wie auch beim vorliegenden Verfahren kann also das Dampfgargerät nach Art einer Schublade in horizontaler Richtung zwischen einer Betriebsstellung und einer Beladestellung bewegt werden, wobei
- in der Betriebsstellung das Dampfgargerät vollständig in einen Gehäusekörper, beispielsweise in einen Möbelkorpus, eingefahren ist und
- in der Beladestellung das Schubladenfach des Dampfgargerätes aus dem Gehäusekörper herausgefahren ist.

Dieses als Schublade ausgebildete Dampfgargerät weist vier Wände auf, nämlich
- eine der Bedienseite zugewandte Frontwand, welche auch als Gehäuseelement ausgebildet ist,
- eine von der Bedienseite abgewandte Rückwand und
- zwei die Frontwand und die Rückwand miteinander verbindende Seitenwände.

Um die Schublade bei der Bewegung von der Betriebsstellung in die Beladestellung und umgekehrt zu führen, weist diese vorteilhafterweise an den Seitenwänden angeordnete Führungselemente auf, welche dazu ausgebildet sind mit korrespondierenden Führungselementen des Gehäusekörpers derart zusammenzuwirken, dass das Dampfgargerät nach Art einer Schublade bewegbar ist.

Der von den vier Wänden der Schublade umgebene Bereich kann als Schubladenfach bezeichnet werden. In dem Schubladenfach ist mindestens ein zum Beaufschlagen der Esswaren mit Dampf ausgebildeter Garraum anordbar. Der Garraum ist zum Behandeln, insbesondere zum Auftauen, zum Erwärmen und/oder zum Garen, von Esswaren mittels Dampf ausgebildet.

Beim in Figur 5 gezeigten Stand der Technik sowie bei dem in der Druckschrift EP 3 470 739 A1 offenbarten Dampfgargerät ist der Garraum fest in den Ofen integriert.

Bei einer besonders vorteilhaften Ausführungsform der vorliegenden Erfindung ist der Esswarenbehälter herausnehmbar im Schubladenfach angeordnet. Der Esswarenbehälter ist derart in dem als Schublade ausgebildeten Dampfgargerät angeordnet, dass der Esswarenbehälter die Bereiche des zum Zubereiten der Esswaren ausgebildeten Garraums begrenzt. Mit anderen Worten ist der Esswarenbehälter dazu ausgebildet den Garraum nach Art einer Muffel zu begrenzen.

Eine herausnehmbare Garraumbegrenzung hat den Vorteil, dass diese einfach gereinigt werden kann, beispielsweise in einer Spülmaschine. Zudem kann eine herausnehmbare Garraumbegrenzung zum Bestücken des Dampfgargerätes mit Esswaren genutzt werden. Ein weiterer Vorteil der herausnehmbaren Garraumbegrenzung ist, dass durch das Herausnehmen der Garraumbegrenzung der den Garraum umgebende Bereich des Schubladenfaches frei gelegt wird. So kann beispielsweise bei der Wartung des Dampfgargerätes durch ein Herausnehmen der Garraumbegrenzung auf einfache Weise Zugang zu dem den Garraum umgebenden Innenraum des Schubladenfaches und eventuell dort angeordneter technischer Elemente ermöglicht werden.

Um die Garraumbegrenzung herausnehmbar im Dampfgargerät anzuordnen, kann das Dampfgargerät mindestens eine zum Stützen der Garraumbegrenzung ausgebildete Tragfläche, insbesondere mindestens einen Tragrahmen, aufweisen. Die Tragfläche kann durch eine oberseitig an der Schublade angeordnete Deckfläche gebildet sein, welche mindestens eine zum Aufnehmen der Garraumbegrenzung ausgebildete Ausnehmung aufweist. Des Weiteren kann die Deckfläche mindestens eine zur Aufnahme eines Wasseraufnahmebehältnisses, insbesondere eines Wassertanks, und/oder mindestens eine zur Aufnahme einer Verdampfereinheit ausgebildete Ausnehmung aufweisen. Die Garraumbegrenzung kann mindestens eine Auflagefläche aufweisen, die auf der Tragfläche, insbesondere dem Tragrahmen, beispielsweise auf einem Bereich der Deckfläche, anordbar ist.

Bei der vorliegenden Erfindung ist das Schubladenfach zur Aufnahme des Garraums sowie der Verdampfereinheit ausgebildet, wobei die Verdampfereinheit und der Garraum getrennt voneinander im Schubladenfach angeordnet sind. Der Garraum wird also nur durch den vom Esswarenbehälter umgebenen Bereich gebildet. Dies hat den Vorteil, dass der Garraum bei dem Dampfgargerät der vorliegenden Erfindung kleiner ausgebildet ist als der Garraum des in Figur 5 gezeigten Dampfofens. Zum Beaufschlagen der Esswaren mit einer definierten Temperatur wird bei dem Dampfgargerät der vorliegenden Erfindung aufgrund der geringeren Garraumgröße im Vergleich zum Stand der Technik eine kürzere Aufwärmzeit, weniger Strom und weniger Wasser verbraucht.

Bei der vorliegenden Erfindung ist die Garraumbegrenzung als ein zur Aufnahme von Esswaren ausgebildeter Esswarenbehälter ausgebildet. Die Garraumbegrenzung und der Esswarenbehälter sind also durch dasselbe Element gebildet.

Der Esswarenbehälter weist mindestens einen zur Auflage von Esswaren ausgebildeten Boden und mindestens einen den Boden umlaufenden Rand auf. Vorteilhafterweise ist der Esswarenbehälter frei von Ausnehmungen oder Unterbrechungen. Mit anderen Worten sind der Boden und der Rand des Esswarenbehälters vorteilhafterweise als geschlossene Flächen ausgebildet. Dies hat den Vorteil, dass der Esswarenbehälter beispielsweise als Servierplatte genutzt werden kann.

Bei der vorliegenden Erfindung ist der Dampfeinlass in die Abdeckung integriert. Dies hat den Vorteil, dass im Gegensatz zum Stand der Technik die Garraumbegrenzung keine Ausnehmung für den Dampfeinlass aufzuweisen braucht.

Zum Bereitstellen von Dampf ist in dem Schubladenfach eine Verdampfereinheit angeordnet. Diese Verdampfereinheit ist im Schubladenfach außerhalb des Garraums angeordnet und kann dazu ausgebildet sein Wasser zu erwärmen, insbesondere zu erhitzen, und/oder zu verdampfen und/oder zu vaporisieren. Die Verdampfereinheit steht mit dem zum Beaufschlagen der Esswaren mit Dampf ausgebildeten Garraum in Wirkverbindung.

Die Verdampfereinheit ist dazu ausgebildet, dem Garraum über einen in die Abdeckung integrierten Dampfeinlass Dampf zuzuführen. Dabei kann der Dampfeinlass mindestens eine mit der Verdampfereinheit sowie mit dem Garraum verbundene Ausnehmung oder Aushöhlung der Abdeckung, beispielsweise mindesten ein zum Leiten von Dampf ausgebildeter Pfad oder Dampfleitkanal der Abdeckung, sein. Das Integrieren des Dampfeinlasses in die Abdeckung hat den Vorteil, dass der Dampfeinlass beim Öffnen und Schließen der Abdeckung abnutzungsfrei der Bewegung der Abdeckung folgt. Dieses Ausführungsbeispiel hat im Vergleich zu einem Ausführungsbeispiel, bei welchem separate Leitungen zum Leiten des Dampfes von der Verdampfereinheit zum Garraum vorgesehen sind, den Vorteil, dass ein unerwünschtes Verbiegen und eine damit bedingte Abnutzung oder Beschädigung der Leitungen verhindert wird.

Um ein Ansammeln von Kondensat im Dampfeinlass, insbesondere im Dampfleitkanal, zu verhindern, ist dieser vorteilhafterweise in mindestens einem Winkel zur Horizontalen geneigt. So können aus dem Dampf auskondensierende Tropfen abfließen.

Die Abdeckung kann beispielsweise als eine nach Oben hin verschwenkbare Klappe oder als ein nach oben hin verschwenkbarer Deckel ausgebildet sein.

Um in der Betriebsstellung des Dampfgerätes den Esswarenbehälter oberseitig abzudecken, insbesondere zu verschließen, weist die Abdeckung vorteilhafterweise mindestens eine zum Abdecken des Esswarenbehälters ausgebildete Abdeckfläche auf. Um beim Betrieb des Dampfgargerätes die Esswaren beobachten zu können, ist vorteilhafterweise zumindest ein Bereich der Abdeckfläche transparent ausgebildet. Dieser transparente Bereich kann beispielsweise nach Art eines Fensters ausgebildet sein. Die Abdeckfläche, insbesondere der transparente Bereich der Abdeckfläche, kann zum Beispiel aus Glas oder aus transparentem Kunststoff sein.

Zum verschwenkbaren Befestigen der Abdeckung an dem Dampfgargerät kann die Abdeckung eine Scharniereinrichtung aufweisen. Diese Scharniereinrichtung ist vorteilhafterweise am von der Bedienseite abgewandten Ende der Oberseite des Dampfgargerätes angeordnet. Bei einem besonders vorteilhaften Ausführungsbeispiel der vorliegenden Erfindung ist der Dampfeinlass in die Scharniereinrichtung integriert. Beispielsweise kann der Dampfeinlass eine als Dampfstrombahn oder Dampffließweg oder Dampfleitkanal ausgebildete Ausnehmung oder Aushöhlung der Scharniereinrichtung sein. Dies hat den Vorteil, dass der Dampfeinlass abnutzungsfrei der Bewegung der Scharniereinrichtung beim Öffnen und Schließen der Abdeckung folgt.

Zum Verschwenken der Abdeckung weist die Scharniereinrichtung mindestens ein um eine Achse drehbares Gelenk auf. Zum Befestigen der Abdeckfläche am drehbaren Gelenk kann die Scharniereinrichtung des Weiteren mindestens ein Befestigungselement aufweisen. Dieses Befestigungselement kann beispielsweise mittels mindestens eines Extrusions-Verfahrens, insbesondere mittels Strangpressen, hergestellt sein.

Um die Temperatur des von der Verdampfereinheit bereitzustellenden Dampfes zu regulieren, kann das Dampfgargerät mindestens einen Sensor zum Erfassen der im Garraum vorliegenden Temperatur und/oder Luftfeuchtigkeit und/oder des im Garraum vorherrschenden Luftdrucks und mindestens eine Steuereinheit aufweisen. Dabei ist die Steuereinheit mit den vom Sensor erfassten Daten beaufschlagbar und dazu ausgebildet die Verdampfereinheit mit mindestens einem Signal zu beaufschlagen, das zum Regeln der Temperatur des von der Verdampfereinheit bereitzustellenden Dampfes ausgebildet ist und in Abhängigkeit von den vom Sensor erfassten Daten erstellt ist. Unabhängig hiervon oder in Verbindung hiermit kann die Steuereinheit dazu ausgebildet sein, die Durchflussrate des durch den Dampfeinlass strömenden Dampfes in Abhängigkeit von den von der Steuereinheit erfassten Daten zu regulieren.

Um Druck sowie überschüssigen Dampf aus dem Garraum abzuführen, weist ein vorteilhaftes Ausführungsbeispiel der vorliegenden Erfindung mindestens einen in die Abdeckung, insbesondere in die Scharniereinrichtung, integrierten Dampfauslass auf.

Vorteilhafterweise ist die Steuereinheit dazu ausgebildet, die Durchflussrate des durch den Dampfauslass strömenden Dampfes in Abhängigkeit von den vom Sensor erfassten Daten zu regulieren. Insbesondere kann die Steuereinheit dazu ausgebildet sein, die Durchflussrate des durch den Dampfauslass strömenden Dampfes derart zu regulieren, dass im Betriebszustand der im Garraum vorliegende Druck im Wesentlichen dem atmosphärischen Druck entspricht oder nur wenige Millibar über dem atmosphärischen Druck liegt.

In der Betriebsstellung des Dampfgargeräts deckt die Abdeckung den Esswarenbehälter ab und verschließt den vom Esswarenbehälter umgebenen Garraum vorteilhafterweise gasdicht.

Die vorliegende Erfindung betrifft des Weiteren die Verwendung eines Dampfgerätes nach mindestens einem der Ansprüche 1 bis 13 und/oder eines Verfahrens gemäß Anspruch 14 oder 15 zum Zubereiten, insbesondere zum Kochen, zum Wärmen, zum Warmhalten, und/oder zum Auftauen, von Esswaren, insbesondere von Gargut, bei einem Temperaturbereich von etwa 30 bis etwa 100 Grad mit Dampf, insbesondere bei einer Luftfeuchte von etwa 100 Prozent.

### Kurze Beschreibung der Zeichnungen

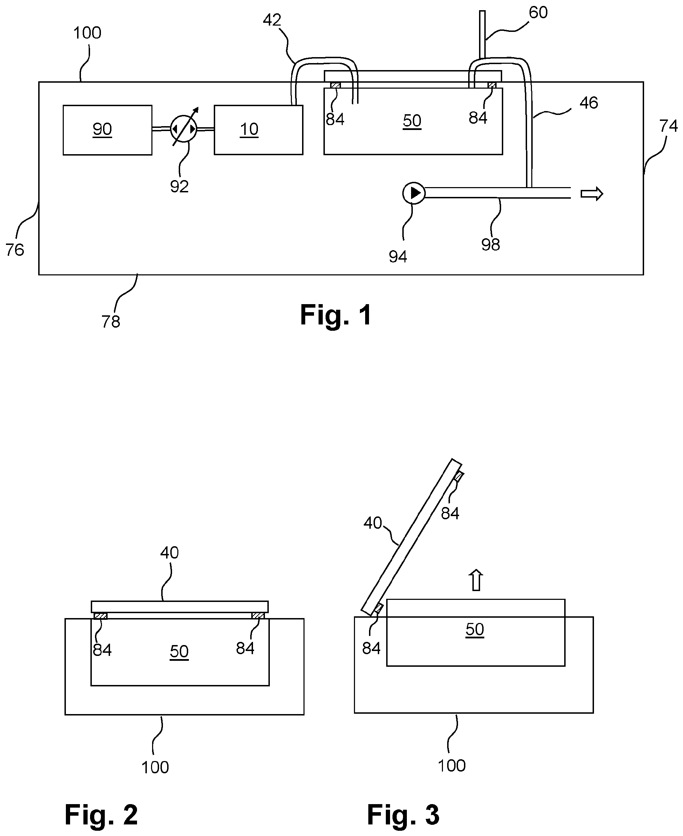

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 14 nachgeordneten Ansprüche verwiesen, andererseits werden weitere Ausgestaltungen, Merkmale und Vorteile der vorliegenden Erfindung nachstehend unter anderem anhand des durch die Figuren 1 bis 4 sowie 6 bis 14 veranschaulichten beiden Ausführungsbeispiele näher erläutert.

Es zeigt:
- Fig. 1: in schematischer Darstellung ein erstes Ausführungsbeispiel für ein Dampfgargerät gemäß der vorliegenden Erfindung, das nach dem Verfahren gemäß der vorliegenden Erfindung arbeitet;
- Fig. 2: in schematischer Darstellung den Garraum des Dampfgargerätes aus Figur 1 in Betriebsstellung;
- Fig. 3: in schematischer Darstellung den Garraum des Dampfgargerätes aus Figur 1 in Beladestellung;
- Fig. 4: in schematischer Darstellung einen Querschnitt des Garraums des Dampfgargerätes aus Figur 1 in Betriebsstellung;
- Fig. 5: in schematischer Darstellung ein Dampfgargerät aus dem Stand der Technik;
- Fig. 6: in perspektivischer Darstellung ein zweites Ausführungsbeispiel für ein Dampfgargerät gemäß der vorliegenden Erfindung, das nach dem Verfahren gemäß der vorliegenden Erfindung arbeitet;
- Fig. 7: in perspektivischer Darstellung das Dampfgargerät aus Fig. 6 mit geschlossener Abdeckung;
- Fig. 8: eine Aufsicht auf das Dampfgargerät aus Fig. 7;
- Fig. 9: in Längsschnittdarstellung das Dampfgargerät aus Fig. 6.
- Fig. 10: in Querschnittdarstellung eine Detailansicht der Scharniereinrichtung des Dampfgargerätes aus Fig. 6;
- Fig. 11: in perspektivischer Darstellung eine Detailansicht der Scharniereinrichtung des Dampfgargerätes aus Fig. 6;
- Fig 12: in perspektivischer Darstellung die Abdeckung des Dampfgargerätes aus Fig. 6;
- Fig. 13: in perspektivischer Darstellung die Unterseite der Abdeckung des Dampfgargerätes aus Fig. 6; und
- Fig. 14: einen Längsschnitt der Abdeckung des Dampfgargerätes aus Fig. 6.

Gleiche oder ähnliche Ausgestaltungen, Elemente oder Merkmale sind in den Figuren 1 bis 14 mit identischen Bezugszeichen versehen.

### Bester Weg zur Ausführung der Erfindung

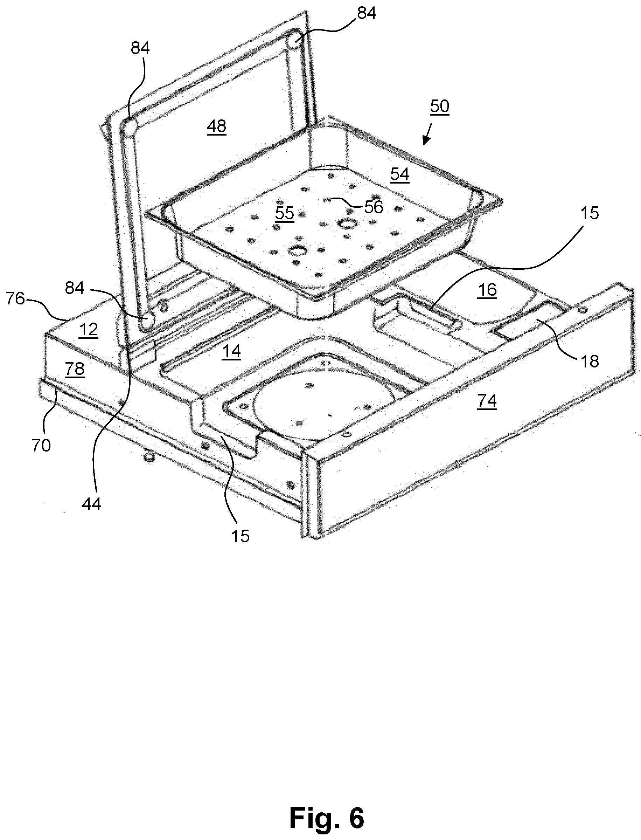

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in Figur 1 dargestellte Dampfgargerät 100 als auch auf das in Figur 6 dargestellte Dampfgargerät 102.

Im anhand der Figuren 1 bis 4 veranschaulichten ersten Ausführungsbeispiel der vorliegenden Erfindung ist ein als Schublade ausgebildetes Dampfgargerät 100 gezeigt, dass nach dem Verfahren gemäß der vorliegenden Erfindung arbeitet. Diese Dampfschublade 100, erlaubt es Gargut in einem Bereich von 30°C bis 100°C bei 100 prozentiger Luftfeuchte zu garen, zu kochen, zu wärmen und/oder aufzutauen. Des Weiteren ist es auch möglich, in der Dampfschublade Backwaren treiben zu lassen, beispielsweise Hefeteig oder Sauerteig aufgehen zu lassen.

Wie in Figur 1 gezeigt, hat die Dampfschublade 100 ein ähnliches funktionelles Konzept wie der in Figur 5 gezeigte Dampfofen 100' aus dem Stand der Technik. Im Gegensatz zu diesem ist die Dampfschublade 100 jedoch nach Art einer Schublade ausgebildet. In der Dampfschublade 100 sind
- ein zum Bereitstellen von Wasser für die Dampfherstellung ausgebildeter Wasseraufnahmebehälter, nämlich ein Tank 90,
- eine zum Bereitstellen von Dampf ausgebildete Verdampfereinheit, nämlich ein Dampfgenerator 10, und
- ein zum Begrenzen des Garraums sowie zum Aufnehmen von Esswaren ausgebildeter, herausnehmbarer Esswarenbehälter 50
angeordnet.

Eine Pumpe 92 befördert das Wasser vom Tank 90 zum Dampfgenerator 10, wo es erhitzt und vaporisiert wird. Anstelle des Tanks 90 können alternativ ein fester Nutzwasseranschluss oder ein interner Tank und ein externes Saugrohr vorgesehen sein.

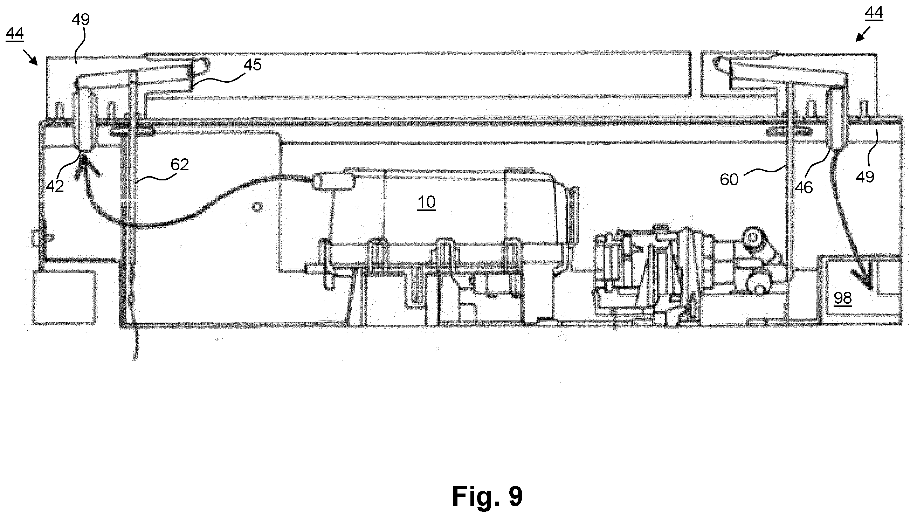

Der Dampf gelangt über einen Dampfeinlass 42 in einen zum Beaufschlagen der Esswaren mit Dampf ausgebildeten Garraum 20. Der Dampfeinlass 42 ist durch eine Ausnehmung oder ein Loch einer Abdeckung 40 des Garraums 20 gebildet. Das in Figur 1 dargestellte erste Ausführungsbeispiel einer Dampfschublade 100 gemäß der vorliegenden Erfindung unterscheidet sich von dem in der Figur 6 dargestellten zweiten Ausführungsbeispiel einer Dampfschublade 102 gemäß der vorliegenden Erfindung durch die Anordnung des Dampfeinlasses 42. Bei der in Figur 1 dargestellten Dampfschublade 100 ist der Dampfeinlass 42 in einer zum Abdecken des Garraums 20 ausgebildeten Abdeckfläche 48 der Abdeckung 40 angeordnet. Bei der in Figur 6 dargestellten Dampfschublade 102 ist der Dampfeinlasses 42 dagegen in einem Scharnier 44 der Abdeckung 40 angeordnet (vgl. Figur 9).

Die Abdeckung 40 ist oberseitig auf dem Garraum 20 angeordnet und zum Öffnen sowie zum Verschließen einer Garraumöffnung ausgebildet. Dabei kann die Abdeckung 40 mittels des Scharniers 44 nach oben verschwenkt, insbesondere auf- und zugeklappt, werden. Die Abdeckung 40 kann beispielsweise als ein verschwenkbares oberes Deck-Fenster ausgebildet sein.

Bei geöffneter Abdeckung 40 ist der Esswarenbehälter 50 in das Schubladenfach einsetzbar sowie aus dem Schubladenfach entnehmbar.

Ein Dampfauslass 46 erlaubt Überdruck aus dem Garraum 20 abzuziehen. Der Dampfauslass 46 mündet in einen Auslass 98 der Dampfschublade 100. In dem Dampfschubladen-Auslass 98 wird der abgezogene Dampf mit Frischluft vermischt und mit Hilfe eines mit dem Dampfschubladen-Auslass 98 in Wirkverbindung stehenden Gebläses 94 in den Raum, im welchem die Dampfschublade 100 angeordnet ist, beispielsweise in eine Küche, ausgelassen. Ein im Dampfauslass 46 angeordneter Temperatursensor 60 misst die Temperatur des abgezogenen Dampfes, um die Dampfherstellung zu regulieren.

Des Weiteren kann im Garraum 20 ein herausnehmbarer Temperaturfühler angeordnet werden.

Um ein unerwünschtes Öffnen der Abdeckung 40 beim Betrieb der Dampfschublade 100 zu verhindern und um zu erreichen, dass die Abdeckung 40 dicht auf dem Esswarenbehälter 50 aufliegt, ist der im Garraum 20 anliegende Druck vorzugsweise möglichst gering gehalten.

Um den im Garraum 20 anliegenden Druck möglichst gering zu halten, ist der Dampfeinlass 42 derart ausgebildet, dass der Dampf nur mit geringem Druck einströmt. Beispielsweise kann zu diesem Zweck der Dampfeinlass einen Durchmesser von mindestens etwa 6 Millimetern aufweisen.

Der Garraum 20 ist in schematischer Darstellung
- in Figur 2 in einer Betriebsstellung gezeigt und
- in Figur 3 in einer Beladestellung gezeigt.
Nach dem Öffnen der Abdeckung 40 kann ein Benutzer der Dampf-Schublade 100 den Garraum 20 aus der Vorrichtung 20 entnehmen.

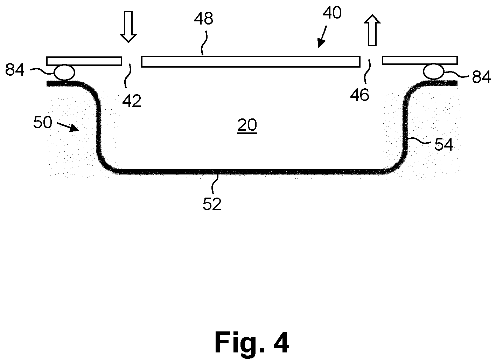

Figur 4 zeigt in schematischer Darstellung einen Querschnitt des Garraums 20 in Betriebsstellung. Ein zwischen der Abdeckung 40 und dem Esswarenbehälter 50 angeordnetes Abdeckflächen-Dichtelement 84 dichtet den Garraum umfassend ab. Der dem Garraum 20 zugeführte Dampf bleibt somit unverdünnt. Da der Garraum 20 nach außen abgedichtet ist, tritt keine Luft von außen ein. Dies ermöglicht es, die Esswaren mit hundert prozentiger Luftfeuchte zu beaufschlagen.

Alle auftretenden Kondensate sinken an den Boden 52 des Esswarenbehälters 50. Der Boden 52 des Esswarenbehälters 50 ist geschlossen ausgebildet. Auf dem Boden 52 kann ein Innenboden 55 angeordnet sein (vgl. Figur 6), welcher Innenbodenausnehmungen 56 aufweist. Auf diese Weise kann aus dem Dampf auskondensiertes Kondensat durch die Innenbodenausnehmungen 56 auf den Boden 52 des Esswarenbehälters abfließen. Die Esswaren sind somit auf dem Innenboden 55 frei von Kondensat angeordnet. Das Kondensat sammelt sich im Bereich zwischen dem Boden 52 und dem Innenboden 55. Eine spezielle Einrichtung zum Abführen des Kondensates ist somit nicht erforderlich.

Bei der in Figur 6 gezeigten Dampf-Schublade 102 ist der Esswarenbehälter 50 aus der Dampfschublade 102 herausgenommen. Das Schubladenfach der Dampf-Schublade 102 hat eine oberseitige Deckfläche 12 mit einer zur Aufnahme der Garraumbegrenzung 50 ausgebildeten Garraum-Ausnehmung 14.

Um das Herausnehmen des Esswarenbehälters 50 zu erleichtern, sind seitlich an der Garraum-Ausnehmung 14 Grifföffnungen 15 angeordnet. Da der Esswarenbehälter 50 herausnehmbar ist, kann er als Servierplatte genutzt und einfach gereinigt werden. Bei dem in Figur 5 gezeigten Dampfofen 100'aus dem Stand der Technik werden die Esswaren auf einer Platte oder einem Blech angeordnet und dann mit der Platte in den Garraum eingeführt. Bei der vorliegenden Erfindung bildet dagegen der Esswarenbehälter 50 den Garraum 20. Esswarenbehälter 50 und Garraumbegrenzung sind also dasselbe Element.

Alternativ zu den in den Figuren 1 und 6 gezeigten Ausführungsbeispielen einer Dampf-Schublade 100, 102 kann anstelle eines herausnehmbaren Esswarenbehälters 50 eine feste Garraumbegrenzung oder Garmuffel in der Dampf-Schublade 100, 102 angeordnet sein.

Die Verdampfereinheit 10 kann im Schubladenfach unterhalb der Deckfläche 12 angeordnet sein (vgl. Figuren 6 und 9).

Unabhängig hiervon oder in Verbindung hiermit kann die Verdampfereinheit 10 mindestens ein unter dem Garraum 20 angeordnetes und zum Beheizen des Garraums 20 ausgebildetes Heizelement sein. In diesem Fall ist die Verdampfereinheit 10 also kein Dampfgenerator sondern stattdessen mindestens ein unter dem Garraum 20 angeordnetes Heizelement. Ein unter dem Garraum 20 angeordnetes Heizelement hat den weiteren Vorteil, dass auf den Boden des Garraums sinkende Kondensattropfen durch die Wärme verdampfen.

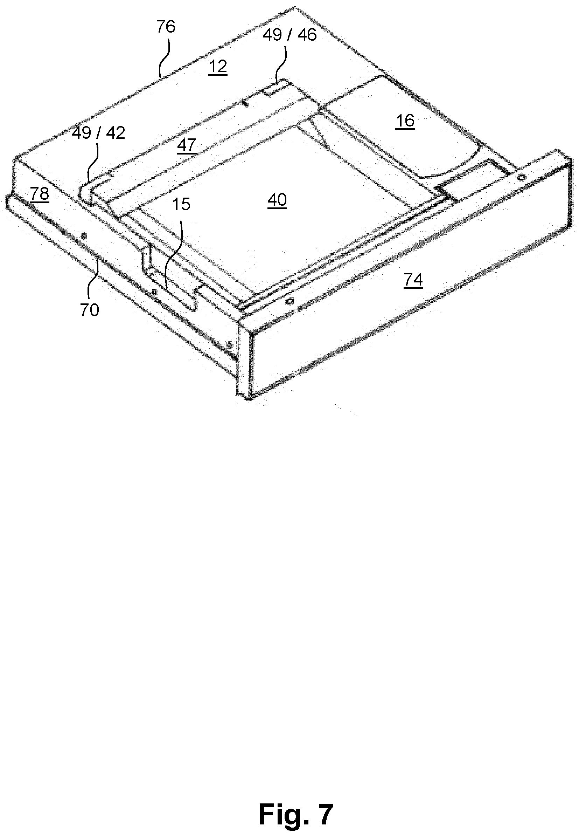

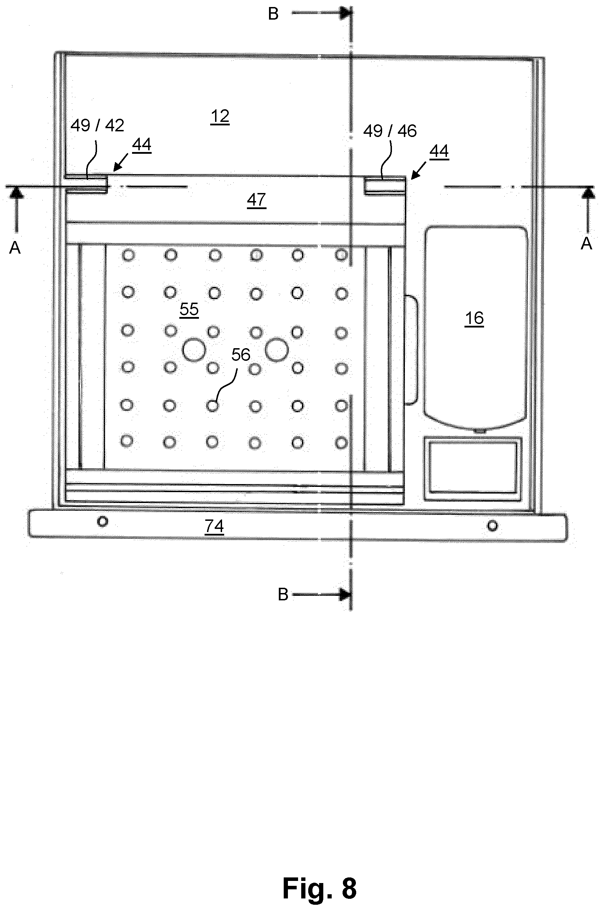

Figur 7 zeigt in perspektivischer Darstellung die Dampfschublade 102 aus Fig. 6 mit geschlossener Abdeckung 40. Die Abdeckfläche 48 der Abdeckung 40 ist transparent ausgebildet. Figur 8 zeigt eine Aufsicht auf die Dampfschublade 102 aus Fig. 7. Aufgrund der als transparentes Fenster ausgebildeten Abdeckfläche 48 ist der Innenboden 55 des Esswarenbehälters 50 auch bei geschlossener Abdeckung 40 sichtbar.

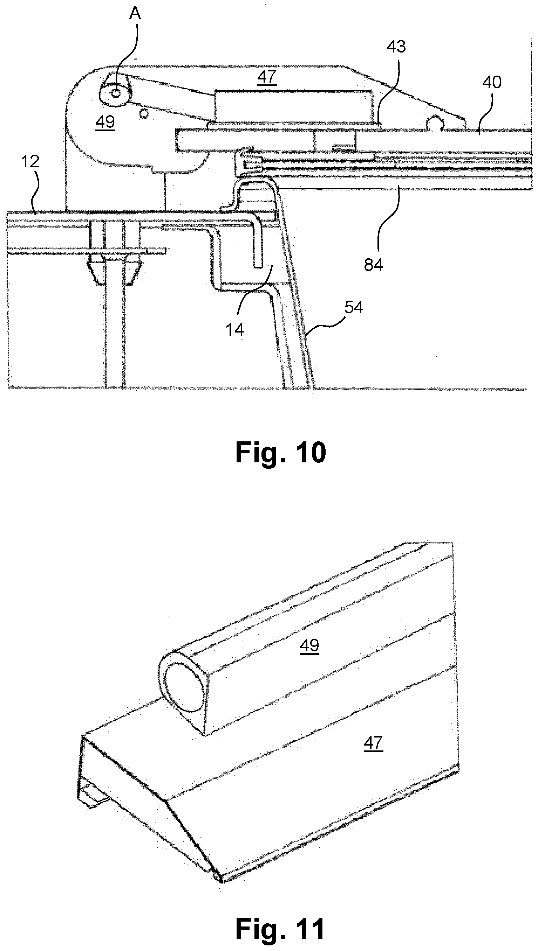

Figur 9 zeigt einen Querschnitt der Dampfschublade 102 entlang der in Figur 8 eingezeichneten Linie AA. Der Dampfgenerator 10 ist mit einem Dampfeinlass 42 eines Dampfleitkanals verbunden. Dieser Dampfeinlass 42 ist an einem dem Dampfgenerator 42 zugewandten Bereich eines Scharniers 44 angeordnet und erstreckt sich als Dampfleitkanal durch ein drehbares Gelenk 49 des Scharniers 44. Das drehbare Gelenk 49 ist in Figur 11 im Detail dargestellt und kann als symmetrischer um eine Achse drehbarer Schaft ausgebildet sein.

An einem weiteren Scharnier 44 der Abdeckung 40 erstreckt sich ein als Dampfauslass 46 ausgebildeter Dampfleitkanal durch ein drehbares Gelenk 49 des Scharniers 44. Die drehbaren Gelenke 49 der Scharniere 44 weisen also Dampfleitkanäle 42, 46 auf. Alternativ kann die Dampf-Schublade 102 auch ohne Dampfauslass 46 ausgebildet sein (nicht gezeigt).

Der als Dampfeinlass 42 ausgebildete Dampfleitkanal und, sofern vorhanden, der als Dampfauslass 46 ausgebildete Dampfleitkanal ist mindestens 5 Grad zur Horizontalen geneigt, um ein Ansammeln von Kondensationstropfen zu verhindern.

Die transparent ausgebildete Abdeckfläche 48 der Abdeckung 40 ist mittels eines Befestigungselements, nämlich einer Abdeck-Befestigung 47, an dem drehbaren Gelenk 49 befestigt. Um die Verbindung zwischen der Abdeckbefestigung 47 und dem drehbaren Gelenk 49 abzudichten sowie um die Drehbarkeit des Scharniers sicherzustellen, weist jedes Scharnier 44 mindestens ein Scharnier-Dichtelement 45, beispielsweise einen O-Ring, auf.

An der Dampfauslassseite ist der Dampfauslass 46 des Garraums 20 verbunden mit einem Auslass 98 der Dampfschulbade 102. Im Dampfschulbaden-Auslass 98 vermischt sich der aus dem Dampfauslass 46 des Garraums 20 ausgelassene Dampf mit Luft und strömt aus der Dampfschulbade 102 aus.

Ein mit Verbindung zum Dampfauslass 46 des Garraums 20 angeordneter Temperatur-Sensor 60 misst die Temperatur des Dampfes. Der Temperatur-Sensor 60 ist dazu ausgebildet, mit dem Dampfgenerator 10 derart zusammenzuwirken, dass die im Garraum 20 vorliegende Temperatur unterhalb des Siedepunktes des Wassers gehalten wird. Die Siedetemperatur des Wassers hängt vom atmosphärischen Druck ab und variiert beispielsweise in Abhängigkeit von der Höhe über dem Meeresspiegel. Die Temperatur des Wassersiedepunktes kann mit aus dem Stand der Technik bekannten Kalibriertechniken oder Druckmesstechniken bestimmt werden.

Um die im Garraum vorherrschende Temperatur möglichst genau bestimmen zu können, kann die Dampfschublade 102 zudem einen weiteren zum Messen der Temperatur und/oder des vorherrschenden Drucks ausgebildeten Sensor 62 aufweisen.

Bei dem in Figur 9 gezeigten Ausführungsbeispiel sind der Temperatur-Sensor 60 sowie der weitere Sensor 62 im Scharnier 44 angeordnet. Der weitere Sensor 62 steht mit dem Dampfeinlass 42 in Verbindung. Alternativ hierzu kann der Temperatur-Sensor 60 und/oder der weitere Sensor 62 an einem anderen Ort der Dampfschublade 102, beispielsweise im Garraum 20, am Fenster 48, im drehbaren Gelenk 49 oder im Dampfleitkanal 42, 46 angeordnet sein.

Figur 10 zeigt im Längsschnitt die Abdeck-Befestigung 47 und den Dampfleitkanal des Dampeinlasses 42 der Dampfschublade 102 entlang der in Figur 8 eingezeichneten Linie BB. Die Abdeck-Befestigung 47 kann beispielsweise aus Aluminium sein und ist vorteilhafterweise ein extrudiertes, beispielsweise stranggepresstes oder fließgepresstes, Element. Der Dampfleitkanal des Dampeinlasses 42 sowie optional des Dampfauslasses 46 ist mittels eines Extrudierverfahrens besonders einfach herstellbar.

Die Abdeckbefestigung 47 und mindestens ein Element des drehbaren Gelenks 49 sind vorteilhafterweise einstückig ausgebildet. So kann, wie in Figur 11 gezeigt, das Drehgelenk ein um seine Längsachse drehbarer Schaft sein und einstückig mit der Abdeckbefestigung 47 ausgebildet sein. Die Abdeckbefestigung 47 ist durch den drehbaren Schaft 49 derart mit mindestens einem an der Deckfläche 14 des Schubladenfaches befestigten Element des Scharniers 44 verbunden, dass die Abdeckbefestigung 47 sich um die Längsachse des drehbaren Schafts 49 drehen kann.

Ein O-Ring 43 stellt die Dichtigkeit zwischen der Abdeck-Befestigung 47 und dem Abdeck-Fenster 48 sicher. Der in Figur 10 markierte Punkt A ist ein Schnittpunkt der in Figur 8 eingezeichneten Linie AA.

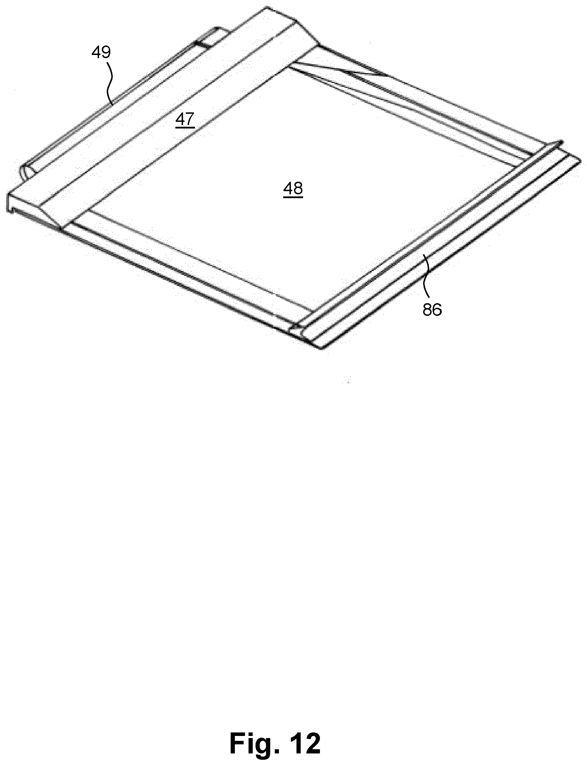

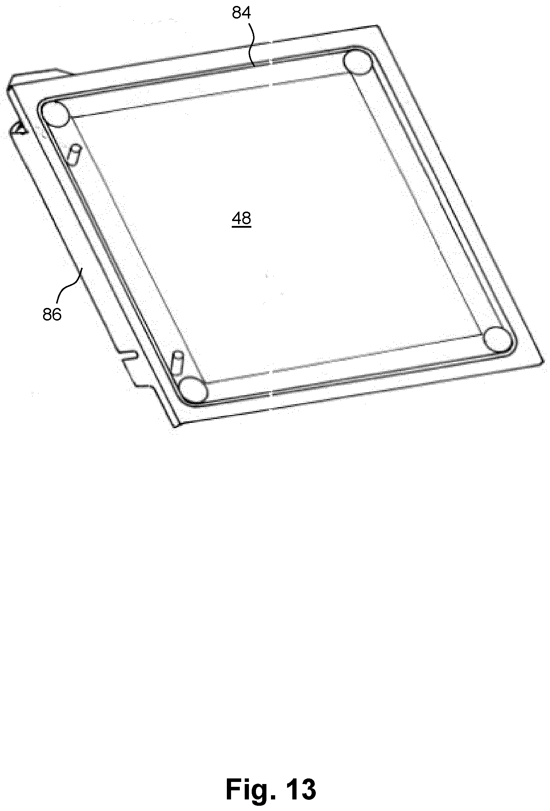

Figur 12 zeigt eine Aufsicht auf die Abdeckung 40. In Figur 13 ist die Unterseite der Abdeckung 40 gezeigt. Die Abdeckung 40 weist mehrere Hauptelemente auf, nämlich
- die Abdeckbefestigung 47
- das Abdeck-Fenster 48
- ein Griffelement 86 und
- das zwischen der Abdeckung 40 und dem Esswarenbehälter 50 angeordnete Abdeckflächen-Dichtelement 84 zum gasdichten Verschließen des Garraums 20.

Die Abdeckbefestigung 47 hält das Abdeck-Fenster 48 und erlaubt den Dampffluss durch das Scharnier 44.

Das Abdeck-Fenster 48, das beispielsweise eine Glasplatte sein kann, schließt den Garraum 20. Das Abdeck-Fenster 48 kann transparent ausgebildet sein, um Einblick in den Garraum 20 zu ermöglichen. Um das zwischen der Abdeckung 40 und dem Esswarenbehälter 50 angeordnete Abdeckflächen-Dichtelement 84 zu verdecken, kann das Abdeck-Fenster 48 mindestens eine Serigrafie aufweisen.

Das Griffelement 86 dient als Griff beim Öffnen und Schließen der Abdeckung 40. Vorzugsweise ist das Griffelement 86 aus einem Material gebildet, welches Wärme nur gering leitet, beispielsweise aus mindestens einem Kunststoff.

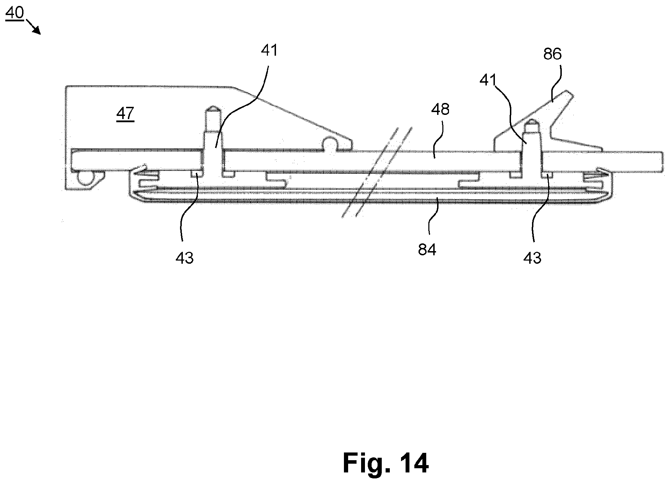

Figur 14 zeigt einen Längsschnitt der Abdeckung 40 durch die Halterungen 41 der Abdeck-Fenster-Dichtelemente 43. Die Abdeck-Fenster-Dichtelemente 43 sind zwischen dem Abdeck-Fenster 48 und der Abdeck-Befestigung 47 bzw. zwischen dem Abdeck-Fenster 48 und dem Griff 86 angeordnet. Die Abdeck-Fenster-Dichtelemente 43 können aus extrudiertem Gummi, beispielsweise aus Silikon, sein. Bei dem in den Figuren 6 bis 14 gezeigten Ausführungsbeispiel der Dampf-Schublade 102 sind vier Abdeck-Fenster-Dichtelemente 43 vorgesehen. Diese Abdeck-Fenster-Dichtelemente 43 sind jeweils zwischen den Halterungen 41 und dem Abdeck-Fenster 48 verspannt. Die Halterungen 41 dienen auch dazu, das Abdeck-Fenster 48 mit der Abdeck-Befestigung 47 bzw. mit dem Griff 86 zu verbinden.

Um ein Grillen der Esswaren zu ermöglichen, kann im Bereich des Abdeck-Fensters 48 ein Grill angeordnet sein. Unabhängig hiervon oder in Verbindung hiermit kann das Abdeck-Fenster 48 beheizbar ausgebildet sein, um ein Beschlagen des Abdeck-Fensters 48 zu verhindern.

### BEZUGSZEICHENLISTE

- 10: zum Bereitstellen von Dampf, insbesondere zum Erwärmen und/oder zum Verdampfen und/oder zum Vaporisieren von Wasser, ausgebildete Verdampfereinheit, insbesondere Dampfgenerator, des Dampfgargerätes 100, 102 der vorliegenden Erfindung; vgl. Figuren 1 und 6
- 10': zum Bereitstellen von Dampf ausgebildeter Dampfgenerator des Dampfgargerätes aus dem Stand der Technik; vgl. Figur 5
- 12: Deckfläche des Schubladenfaches des Dampfgargerätes 100, 102 der vorliegenden Erfindung; vgl. Figuren 1 und 6
- 14: zum Aufnehmen der Garraumbegrenzung 50 ausgebildete Garraum-Ausnehmung der Deckfläche 12
- 15: Grifföffnung der Garraum-Ausnehmung 14
- 16: zum Aufnehmen des Tanks 90 ausgebildete Tank-Ausnehmung der Deckfläche 12
- 20: zum Beaufschlagen der Esswaren mit Dampf ausgebildeter Garraum des Dampfgargerätes 100, 102 der vorliegenden Erfindung; vgl. Figuren 1 und 6
- 20': zum Beaufschlagen der Esswaren mit Dampf ausgebildeter Garraum des Dampfgargerätes 100' aus dem Stand der Technik, vgl. Figur 5
- 40: Abdeckung, insbesondere Deckel oder Klappe, des Esswarenbehälters 50
- 41: Halterung des Abdeck-Fenster-Dichtelements 43
- 42: Dampfeinlass, insbesondere Anschlussstutzen, beispielsweise Dampfstrombahn oder Dampffließweg oder Dampfleitkanal, des Dampfgargeräts 100, 102 der vorliegenden Erfindung; vgl. Figuren 1, 4 und 9
- 42': Dampfeinlass, insbesondere Einlassstutzen, beispielsweise Leitung, zum Leiten von Dampf von der Verdampfereinheit 10' in einen Garraum 20', Ausführungsbeispiel aus dem Stand der Technik, vgl. Fig. 5
- 43: Abdeck-Fenster-Dichtelement angeordnet zwischen der Abdeck-Befestigung 47 und dem Abdeck-Fenster 48 bzw. zwischen dem Griffelement 86 und dem Abdeck-Fenster 48
- 44: Scharniereinrichtung, insbesondere Scharnier, des Dampfgargeräts 100, 102 der vorliegenden Erfindung; vgl. Figuren 6, 9, 10, 11 und 9
- 45: Scharnierdichtelement, insbesondere O-Ring, angeordnet zwischen Abdeck-Befestigung 47 und drehbarem Gelenk 49
- 46: Dampfauslass, insbesondere Auslassstutzen, beispielsweise Dampfstrombahn oder Dampffließweg oder Dampfleitkanal, des Dampfgargeräts 100, 102 der vorliegenden Erfindung; vgl. Figuren 1 und 9
- 46': Dampfauslass, insbesondere Auslassstutzen, des Dampfgargeräts 100'aus dem Stand der Technik; vgl. Figur 5
- 47: Befestigungselement zum Befestigen der Abdeckfläche 48 am Gelenk 49, insbesondere Abdeck-Befestigung
- 48: Abdeckfläche, insbesondere Abdeck-Fenster oder Fenster, der Abdeckung 40
- 49: um eine Achse drehbares Gelenk der Scharniereinrichtung 44, insbesondere Drehgelenk
- 50: Esswarenbehälter oder Gargutbehälter, der dazu ausgebildet ist den Garraum zu begrenzen
- 52: Boden des Esswarenbehälters 50
- 54: Rand des Esswarenbehälters 50
- 55: Innenboden des Esswarenbehälters 50
- 56: Innenbodenausnehmungen des Esswarenbehälters 50
- 60: zum Erfassen der im Garraum 20 vorliegenden Temperatur und/oder Luftfeuchtigkeit und/oder des im Garraum 20 vorherrschenden Luftdrucks ausgebildeter Sensor des Dampfgargerätes 100, 102 der vorliegenden Erfindung; vgl. Figuren 1 und 6
- 60': zum Erfassen der im Garraum 20 vorliegenden Temperatur und/oder Luftfeuchtigkeit und/oder des im Garraum 20 vorherrschenden Luftdrucks ausgebildeter Sensor des Dampfgargerätes 100' aus dem Stand der Technik, vgl. Figur 5
- 62: zum Erfassen der im Garraum 20 vorliegenden Temperatur und/oder Luftfeuchtigkeit und/oder des im Garraum 20 vorherrschenden Luftdrucks ausgebildeter weiterer Sensor des Dampfgargerätes 102 der vorliegenden Erfindung; vgl. Figur 9
- 70: Führungselement, insbesondere Führungsschiene des Dampfgargerätes 100, 102 der vorliegenden Erfindung; vgl. Figur 6
- 72: zum Stützen des Esswarenbehälters 50 ausgebildeter Tragrahmen der Deckfläche 12
- 74: Vorderwand oder Frontwand des Dampfgargerätes 100, 102 der vorliegenden Erfindung; vgl. Figuren 1 und 6
- 76: Rückwand des Dampfgargerätes 100, 102 der vorliegenden Erfindung; vgl. Figuren 1 und 6
- 78: Seitenwand des Dampfgargerätes 100, 102 der vorliegenden Erfindung; vgl. Figuren 1 und 6
- 84: Abdeckflächen-Dichtelement des Dampfgargerätes 100, 102 der vorliegenden Erfindung; vgl. Figuren 1 und 6
- 84': Abdeckflächen-Dichtelement des Dampfgargerätes 100' aus dem Stand der Technik, vgl. Figur 5
- 86: Griffelement oder Griff, insbesondere Haltegriff, der Abdeckfläche 48
- 90: Wasseraufnahmebehälter, insbesondere Tank, beispielsweise Wassertank, etwa aus Plastik; des Dampfgargerätes 100, 102 der vorliegenden Erfindung; vgl. Figuren 1 und 6
- 90': Tank, insbesondere Wassertank, beispielsweise aus Plastik, des Dampfgargerätes 100' aus dem Stand der Technik; vgl. Figur 5
- 92: Pumpe des Dampfgargerätes 100 der vorliegenden Erfindung; vgl. Figur 1
- 92': Pumpe des Dampfgargerätes 100' aus dem Stand der Technik; vgl. Figur 5
- 94: Ventilator oder Gebläse des Dampfgargerätes 100 der vorliegenden Erfindung; vgl. Figur 1
- 94': Ventilator oder Gebläse des Dampfgargerätes 100' aus dem Stand der Technik; vgl. Figur 5
- 98: Luft-Auslass des Dampfgargerätes 100 bzw. des Dampfgargerätes 102
- 100: Dampfgargerät, insbesondere Schubladen-Dampfgarer oder Dampf-Schublade, erstes Ausführungsbeispiel gemäß der vorliegenden Erfindung; vgl. Figur 1;
- 102: Dampfgargerät, insbesondere Schubladen-Dampfgarer oder Dampf-Schublade, zweites Ausführungsbeispiel gemäß der vorliegenden Erfindung; vgl. Figur 6;
- 100': Dampfofen aus dem Stand der Technik; vgl. Figur 5
- AA: in Figur 8 eingezeichnete Schnittlinie des in Figur 9 gezeigten Querschnitts
- BB: in Figur 8 eingezeichnete Schnittlinie des in Figur 9 gezeigten Längsschnitts

## Patentansprüche

1. Dampfgargerät (100; 102) zum Behandeln, insbesondere zum Auftauen, zum Erwärmen und/oder zum Garen, von Esswaren mittels Dampf, wobei das Dampfgargerät (100; 102)
- mindestens eine Verdampfereinheit (10) zum Bereitstellen von mit einer definierten Temperatur belegtem Dampf, und
- mindestens einen Garraum (20) zum Beaufschlagen der Esswaren mit dem von der Verdampfereinheit (10) bereitgestellten Dampf,
aufweist,
wobei der Garraum (20) mindestens eine Garraumöffnung zum Befüllen des Garraums (20) mit Esswaren aufweist,
wobei der Garraum (20) mindestens eine in Betriebsstellung des Dampfgargeräts (100; 102) oberseitige Abdeckung (40) zum Abdecken der Garraumöffnung aufweist, und
wobei das Dampfgargerät (100; 102) mindestens einen Dampfeinlass (42) aufweist, der dazu ausgebildet ist, den von der Verdampfereinheit (10) bereitgestellten Dampf in den Garraum (20) zu leiten,
**dadurch gekennzeichnet,**
- **dass** das Dampfgargerät (100; 102) als Schublade ausgebildet ist und ein zur Aufnahme des Garraums (20) sowie der Verdampfereinheit (10) ausgebildetes Schubladenfach aufweist,
- **dass** die Verdampfereinheit (10) und der Garraum (20) getrennt voneinander im Schubladenfach angeordnet sind,
- **dass** der Garraum (20) ein im Schubladenfach anordbarer und zur Aufnahme von Esswaren ausgebildeter Esswarenbehälter (50) ist, und
- **dass** der Dampfeinlass (42) in die Abdeckung (40) integriert ist.

2. Dampfgargerät nach Anspruch 1, **dadurch gekennzeichnet, dass** der Esswarenbehälter (20) herausnehmbar in der Schublade (100; 102) anordbar ist.

3. Dampfgargerät gemäß Anspruch 1 oder 2, **dadurch gekennzeichnet, dass** die Abdeckung (40) mindestens eine zum verschwenkbaren Befestigen der Abdeckung (40) an einer Deckfläche (12) des Schubladenfachs ausgebildete Scharniereinrichtung (44) aufweist und dass der Dampfeinlass (42) in die Scharniereinrichtung (44) integriert ist.

4. Dampfgargerät gemäß mindestens einem der Ansprüche 1 bis 3, **gekennzeichnet durch**
- mindestens einen in die Abdeckung (40) integrierten Dampfauslass (46) zum Abführen von Dampf aus dem Garraum (20),
- mindestens einen im Dampfauslass angeordneten Sensor (60, 62) zum Erfassen der Temperatur und/oder des Luftdrucks und
- mindestens eine Steuereinheit, die mit den vom Sensor (60, 62) erfassten Daten beaufschlagbar ist und dazu ausgebildet ist die Temperatur des von der Verdampfereinheit (10) bereitgestellten Dampfes in Abhängigkeit von den vom Sensor (60) erfassten Daten zu regulieren, insbesondere derart zu regulieren, dass die Temperatur des im Garraum (20) vorliegenden Dampfes unterhalb des Wassersiedepunktes liegt.

5. Dampfgargerät gemäß mindestens einem der Ansprüche 1 bis 4, **gekennzeichnet durch** seitlich angeordnete Führungselemente (70) welche dazu ausgebildet sind mit korrespondierenden Führungselementen eines Gehäusekörpers derart zusammenzuwirken, dass das Dampfgargerät (100; 102) nach Art einer Schublade in horizontaler Richtung zwischen einer Betriebsstellung und einer Beladestellung bewegbar ist, wobei
- in der Betriebsstellung das Dampfgargerät (100; 102) vollständig in den Gehäusekörper eingefahren ist und
- in der Beladestellung zumindest eine Garraumöffnung des Dampfgargerätes (100; 102) aus dem Gehäusekörper herausgefahren ist.

6. Dampfgargerät gemäß mindestens einem der Ansprüche 1 bis 5, **gekennzeichnet durch** eine oberseitig an der Schublade angeordnete Deckfläche (12), welche mindestens eine zum Aufnehmen des Esswarenbehälters (50) ausgebildete Garraum-Ausnehmung (14) aufweist.

7. Dampfgargerät gemäß mindestens einem der Ansprüche 1 bis 6, **dadurch gekennzeichnet, dass** der Dampfeinlass (42) durch mindestens eine mit der Verdampfereinheit (10) sowie mit dem Garraum (20) verbundene Ausnehmung oder Aushöhlung der Abdeckung (40) gebildet ist, insbesondere dass der Dampfeinlass (42) mindesten ein zum Leiten von Dampf ausgebildeter Dampfleitkanal der Abdeckung ist.

8. Dampfgargerät gemäß mindestens einem der Ansprüche 1 bis 7, **dadurch gekennzeichnet, dass** in der Betriebsstellung des Dampfgargeräts (100; 102) die Abdeckung (40) den Esswarenbehälter (50) abdeckt und den vom Esswarenbehälter (50) umgebenen Garraum (20) gasdicht verschließt.

9. Dampfgargerät gemäß mindestens einem der Ansprüche 2 bis 8, **dadurch gekennzeichnet, dass**
- die Abdeckung (40) mindestens eine zum Abdecken des Esswarenbehälters (50) ausgebildete Abdeckfläche (48) aufweist,
- die Scharniereinrichtung (44) der Abdeckung (40) am von der Bedienseite abgewandten Ende des Dampfgargerätes (100; 102) angeordnet ist und
- die Scharniereinrichtung (44) mindestens ein um eine Achse drehbares Gelenk (49) sowie mindestens ein zum Befestigen der Abdeckfläche (48) am Gelenk (49) ausgebildetes Befestigungselement (47) aufweist.

10. Dampfgargerät gemäß Anspruch 8, **dadurch gekennzeichnet, dass**
- die Abdeckfläche (48) transparent ausgebildet ist und/oder
- das Befestigungselement (47) mittels mindestens eines Extrusions-Verfahrens, insbesondere mittels Strangpressen, hergestellt ist.

11. Dampfgargerät gemäß Anspruch 4, **gekennzeichnet durch** mindestens einen in die Abdeckung (40) integrierten Dampfauslass (46) zum Abführen von Dampf aus dem Garraum (20), wobei der Dampfeinlass (42) und der Dampfauslass (46) derart ausgebildet sind, dass beim Betrieb des Dampfgargerätes (100; 102) der im Garraum (20) herrschende Luftdruck im Wesentlichen dem atmosphärischen Luftdruck entspricht, insbesondere höchstens im Millibarbereich über dem atmosphärischen Luftdruck liegt.

12. Dampfgargerät gemäß mindestens einem der Ansprüche 1 bis 11, **dadurch gekennzeichnet, dass** der Esswarenbehälter (50) einen zur Auflage von Esswaren ausgebildeten Boden (52) und einen den Boden (52) umgebenden umlaufenden Rand (54) aufweist, wobei der Boden (52) und der Rand (54) geschlossen oder unterbrechungsfrei oder frei von Ausnehmungen ausgebildet sind.

13. Verfahren zum Behandeln, insbesondere zum Auftauen, zum Wärmen und/oder zum Garen, von Esswaren mit Dampf, in einem Dampfgargerät (100; 102) wobei
- ein Schubladenfach aus einem Gehäusekörper herausgefahren wird, um das Dampfgargerät (100; 102) mit den Esswaren zu beladen,
- die Esswaren durch mindestens eine Garraumöffnung des Dampfgargerätes (100; 102) in einem Esswarenbehälter (50) angeordnet werden,
- das Schubladenfach geschlossen wird,
- mit einer definierten Temperatur belegter Dampf bereitgestellt wird, und
- die im Garraum angeordneten Esswaren mit dem bereitgestellten Dampf beaufschlagt werden, **dadurch gekennzeichnet, dass**
der befüllte Esswarenbehälter (50) in dem als Schublade ausgebildeten Dampfgargerät (100; 102) derart angeordnet wird, dass der Esswarenbehälter (50) die Bereiche eines zum Zubereiten der Esswaren ausgebildeten Garraums (20) begrenzt, wobei
- zum Befüllen des Esswarenbehälters (50) mit Esswaren eine oberseitige Abdeckung (40) zum Abdecken der Garraumöffnung geöffnet wird,
- nach dem Befüllen des Esswarenbehälters (50) mit Esswaren die Abdeckung (40) geschlossen wird, und
- der bereitgestellte Dampf über mindestens einen in die Abdeckung (40) integrierten Dampfeinlass (42) in den Garraum (20) geleitet wird.

## Claims

1. Steam cooking appliance (100; 102) for the treatment, in particular for the defrosting, heating and/or cooking, of food by means of steam, wherein the steam cooking appliance (100; 102) has
- at least one evaporator unit (10) for providing steam that has been assigned a defined temperature, and
- at least one cooking chamber (20) for applying the steam provided by the evaporator unit (10) to the food,
wherein the cooking chamber (20) has at least one cooking chamber opening for filling the cooking chamber (20) with food,
wherein the cooking chamber (20) has at least one upper-side cover (40) in the operating position of the steam cooking appliance (100; 102) for covering the cooking chamber opening, and
wherein the steam cooking chamber (100; 102) has at least one steam inlet (42), which is embodied to conduct the steam provided by the evaporator unit (10) into the cooking chamber (20),
**characterised in that**
- the steam cooking appliance (100; 102) is embodied as a drawer and has a drawer compartment embodied for accommodating the cooking chamber (20) as well as the evaporator unit (10),
- the evaporator unit (10) and the cooking chamber (20) are arranged separately from one another in the drawer compartment,
- the cooking chamber (20) is a food container (50) that can be arranged in the drawer compartment and is embodied for accommodating food, and
- the steam inlet (42) is integrated in the cover (40).

2. Steam cooking appliance according to claim 1, **characterised in that** the food container (20) can be arranged in the drawer (100; 102) such that it can be removed.

3. Steam cooking appliance according to claim 1 or 2, **characterised in that** the cover (40) has at least one hinge facility (44) embodied for pivotably fastening the cover (40) to a top area (12) of the drawer compartment, and the steam inlet (42) is integrated in the hinge facility (44).

4. Steam cooking appliance according to at least one of claims 1 to 3, **characterised by**
- at least one steam outlet (46) integrated in the cover (40) for discharging steam out from the cooking chamber (20),
- at least one sensor (60, 62) arranged in the steam outlet for capturing the temperature and/or air pressure and
- at least one control unit, to which the data captured by the sensor (60, 62) can be applied and which is embodied to regulate the temperature of the steam provided by the evaporator unit (10) as a function of the data captured by the sensor (60), in particular to regulate it in such a manner that the temperature of the steam present in the cooking chamber (20) lies below the boiling point of water.

5. Steam cooking appliance according to at least one of claims 1 to 4, **characterised by** laterally arranged guide elements (70), which are embodied to interact with corresponding guide elements of a guiding body in such a manner that the steam cooking appliance (100; 102) can be moved in the manner of a drawer in a horizontal direction between an operating position and a loading position, wherein
- in the operating position the steam cooking appliance (100; 102) is fully retracted into the housing body and
- in the loading position at least one cooking chamber opening of the steam cooking appliance (100; 102) is moved out from the housing body.

6. Steam cooking appliance according to at least one of claims 1 to 5, **characterised by** a top area (12), which is arranged on the upper side of the drawer and has at least one cooking chamber recess (14) embodied for accommodating the food container (50).

7. Steam cooking appliance according to at least one of claims 1 to 6, **characterised in that** the steam inlet (42) is formed by at least one recess or cavity of the cover (40) connected to the evaporator unit (10) as well as to the cooking chamber (20), in particular that the steam inlet (42) is at least one steam conduction channel of the cover embodied for conducting steam.

8. Steam cooking appliance according to at least one of claims 1 to 7, **characterised in that** in the operating position of the steam cooking appliance (100; 102) the cover (40) covers the food container (50) and closes off, in a gas-tight manner, the cooking chamber (20) surrounded by the food container (50).

9. Steam cooking appliance according to at least one of claims 2 to 8, **characterised in that**
- the cover (40) has at least one cover area (48) embodied for covering the food container (50),
- the hinge facility (44) of the cover (40) is arranged on the end of the steam cooking appliance (100; 102) remote from the operating side and
- the hinge facility (44) has at least one joint (49) that can rotate about an axis as well as at least one fastening element (47) embodied for fastening the cover area (48) on the joint (49).

10. Steam cooking appliance according to claim 8, **characterised in that**
- the cover area (48) is embodied in a transparent manner and/or
- the fastening element (47) is produced by means of an extrusion method, in particular by means of extrusion moulding.

11. Steam cooking appliance according to claim 4, **characterised by** at least one steam outlet (46) integrated in the cover (40) for discharging steam out from the cooking chamber (20), wherein the steam inlet (42) and the steam outlet (46) are embodied in such a manner that, during operation of the steam cooking appliance (100; 102), the air pressure prevailing in the cooking chamber (20) substantially corresponds to the atmospheric air pressure, in particular lies at most in the millibar range above the atmospheric air pressure.

12. Steam cooking appliance according to at least one of claims 1 to 11, **characterised in that** the food container (50) has a bottom (52) embodied for the placement of food and an edge (54) that runs around the bottom (52) in a surrounding manner, wherein the bottom (52) and the edge (54) are embodied as closed or uninterrupted or free from recesses.

13. Method for the treatment, in particular for the defrosting, heating and/or cooking, of food using steam, in a steam cooking appliance (100; 102), wherein
- a drawer compartment is moved out from the housing body, in order to load the steam cooking appliance (100; 102) with the food,
- the food is arranged in a food container (50) through at least one cooking chamber opening of the steam cooking appliance (100; 102),
- the drawer compartment is closed,
- steam is provided which has been assigned a defined temperature, and
- the provided steam is applied to the food arranged in the cooking chamber,
**characterised in that**
the filled food container (50) is arranged in the steam cooking appliance (100; 102) embodied as a drawer in such a manner that the food container (50) delimits the regions of a cooking chamber (20) embodied for the treatment of the food, wherein
- to fill the food container (50) with food, an upper-side cover (40) for covering the cooking chamber opening is opened,
- after filling the food container (50) with food, the cover (40) is closed, and
- the provided steam is conducted into the cooking chamber (20) via at least one steam inlet (42) integrated into the cover (40).

## Revendications

1. Appareil de cuisson à la vapeur (100 ; 102) pour le traitement, en particulier pour la décongélation, le chauffage et/ou la cuisson de denrées alimentaires au moyen de vapeur, dans lequel l'appareil de cuisson à la vapeur (100 ; 102)
- présente au moins une unité d'évaporation (10) pour la mise à disposition de vapeur à une température définie, et
- au moins un espace de cuisson (20) pour exposer les denrées alimentaires à la vapeur mise à disposition par l'unité d'évaporation (10),
dans lequel l'espace de cuisson (20) présente au moins une ouverture d'espace de cuisson pour le remplissage de l'espace de cuisson (20) avec des denrées alimentaires,
dans lequel l'espace de cuisson (20) présente au moins un couvercle supérieur (40) pour la couverture de l'ouverture d'espace de cuisson en position de fonctionnement de l'appareil de cuisson à la vapeur (100 ; 102) et dans lequel l'appareil de cuisson à la vapeur (100 ; 102) présente au moins une entrée de vapeur (42) qui est formée pour diriger la vapeur mise à disposition par l'unité d'évaporation (10) dans l'espace de cuisson (20),
**caractérisé en ce que**
- l'appareil de cuisson à la vapeur (100 ; 102) est formé sous forme de tiroir et présente un compartiment à tiroir formé pour la réception de l'espace de cuisson (20) ainsi que de l'unité d'évaporation (10),
- l'unité d'évaporation (10) et l'espace de cuisson (20) sont disposés séparément dans le compartiment à tiroir,
- l'espace de cuisson (20) est un récipient à denrées alimentaires (50) pouvant être disposé dans le compartiment à tiroir et formé pour recevoir des denrées alimentaires, et
- l'entrée de vapeur (42) est intégrée au couvercle (40).

2. Appareil de cuisson à la vapeur selon la revendication 1, **caractérisé en ce que** le récipient à denrées alimentaires (20) peut être disposé de façon amovible dans le tiroir (100 ; 102).

3. Appareil de cuisson à la vapeur selon la revendication 1 ou 2, **caractérisé en ce que** le couvercle (40) présente au moins un dispositif à charnière (44) formé pour la fixation pivotante du couvercle (40) sur une surface supérieure (12) du compartiment à tiroir, et **en ce que** l'entrée de vapeur (42) est intégrée au dispositif à charnière (44).

4. Appareil de cuisson à la vapeur selon au moins l'une des revendications 1 à 3, **caractérisé par**
- au moins une sortie de vapeur (46) intégrée au couvercle (40) pour l'évacuation de la vapeur hors de l'espace de cuisson (20),
- au moins un capteur (60, 62) disposé dans la sortie de vapeur pour la détection de la température et/ou la pression d'air et
- au moins une unité de commande pouvant être alimentée par les données détectées par le capteur (60, 62) et formée pour réguler la température de la vapeur mise à disposition par l'unité d'évaporation (10) en fonction des données détectées par le capteur (60), en particulier de sorte que la température de la vapeur présente dans l'espace de cuisson (20) soit inférieure au point d'ébullition de l'eau.

5. Appareil de cuisson à la vapeur selon au moins l'une des revendications 1 à 4, **caractérisé par** des éléments de guidage (70) disposés latéralement, lesquels sont formés pour coopérer avec des éléments de guidage correspondants d'un corps de carcasse de sorte que l'appareil de cuisson à la vapeur (100 ; 102) puisse être déplacé à la façon d'un tiroir dans le sens horizontal entre une position de fonctionnement et une position de chargement, dans lequel
- en position de fonctionnement, l'appareil de cuisson à la vapeur (100 ; 102) est intégralement rentré dans le corps de carcasse et
- en position de chargement, au moins une ouverture d'espace de cuisson de l'appareil de cuisson à la vapeur (100 ; 102) est sortie du corps de carcasse.

6. Appareil de cuisson à la vapeur selon au moins l'une des revendications 1 à 5, **caractérisé par** une surface supérieure (12) disposée sur le dessus du tiroir, laquelle présente au moins un évidement d'espace de cuisson (14) formé pour l'accueil du récipient à denrées alimentaires (50).

7. Appareil de cuisson à la vapeur selon au moins l'une des revendications 1 à 6, **caractérisé en ce que** l'entrée de vapeur (42) est formée par au moins un évidement ou une cavité du couvercle (40) relié(e) à l'unité d'évaporation (10) ainsi qu'à l'espace de cuisson (20), en particulier **en ce que** l'entrée de vapeur (42) est au moins un conduit de direction de vapeur du couvercle formé pour diriger la vapeur.

8. Appareil de cuisson à la vapeur selon au moins l'une des revendications 1 à 7, **caractérisé en ce que** dans la position de fonctionnement de l'appareil de cuisson à la vapeur (100 ; 102), le couvercle (40) couvre le récipient à denrées alimentaires (50) et obture de façon étanche aux gaz l'espace de cuisson (20) entouré par le récipient à denrées alimentaires (50).

9. Appareil de cuisson à la vapeur selon au moins l'une des revendications 2 à 8, **caractérisé en ce que**
- le couvercle (40) présente au moins une surface de couverture (48) formée pour la couverture du récipient à denrées alimentaires (50),
- le dispositif à charnière (44) du couvercle (40) est disposé à l'extrémité de l'appareil de cuisson à la vapeur (100 ; 102) éloignée du côté des commandes et
- le dispositif à charnière (44) présente au moins une articulation (49) pivotante autour d'un axe ainsi qu'au moins un élément de fixation (47) formé pour la fixation de la surface de couverture (48) à l'articulation (49).

10. Appareil de cuisson à la vapeur selon la revendication 8, **caractérisé en ce que**
- la surface de couverture (48) est formée de façon transparente et/ou
- l'élément de fixation (47) est fabriqué au moyen d'au moins un procédé d'extrusion, en particulier au moyen d'un boudinage.

11. Appareil de cuisson à la vapeur selon la revendication 4, **caractérisé par** au moins une sortie de vapeur (46) intégrée au couvercle (40) pour l'évacuation de la vapeur hors de l'espace de cuisson (20), dans lequel l'entrée de vapeur (42) et la sortie de vapeur (46) sont formées de sorte que lors du fonctionnement de l'appareil de cuisson à la vapeur (100 ; 102), la pression d'air régnant dans l'espace de cuisson (20) correspond essentiellement à la pression d'air atmosphérique, et se situe en particulier au maximum dans la plage des millibars au-dessus de la pression d'air atmosphérique.

12. Appareil de cuisson à la vapeur selon au moins l'une des revendications 1 à 11, **caractérisé en ce que** le récipient à denrées alimentaires (50) présente un fond (52) formé pour le support de denrées alimentaires et un bord périphérique (54) entourant le fond (52), dans lequel le fond (52) et le bord (54) sont formés de façon fermée ou continue ou sans évidements.

13. Procédé pour le traitement, en particulier pour la décongélation, le chauffage et/ou la cuisson de denrées alimentaires au moyen de vapeur dans un appareil de cuisson à la vapeur (100 ; 102) dans lequel
- un compartiment à tiroir est sorti d'un corps de carcasse pour charger les denrées alimentaires dans l'appareil de cuisson à la vapeur (100 ; 102),
- les denrées alimentaires sont disposées dans un récipient à denrées alimentaires (50) à travers au moins une ouverture d'espace de cuisson de l'appareil de cuisson à la vapeur (100 ; 102),
- le compartiment à tiroir est fermé,
- de la vapeur à une température définie est mise à disposition, et
- les denrées alimentaires disposées dans l'espace de cuisson sont exposées à la vapeur mise à disposition, **caractérisé en ce que** le récipient à denrées alimentaires rempli (50) est disposé dans l'appareil de cuisson à la vapeur formé sous forme de tiroir (100 ; 102) de sorte que le récipient à denrées alimentaires (50) délimite les zones d'un espace de cuisson (20) formé pour la préparation des denrées alimentaires, dans lequel
- pour le remplissage du récipient à denrées alimentaires (50) avec des denrées alimentaires, un couvercle supérieur (40) pour la couverture de l'ouverture d'espace de cuisson est ouvert,
- après le remplissage du récipient à denrées alimentaires (50) à l'aide de denrées alimentaires, le couvercle (40) est fermé, et
- la vapeur mise à disposition est dirigée dans l'espace de cuisson (20) par au moins une entrée de vapeur (42) intégrée au couvercle (40).
